# FASCICULE DE BREVET EUROPEEN

(11) **EP 1 224 854 B1**
(45) Date de publication et mention de la délivrance du brevet: **18.03.2009**
(21) Numéro de dépôt: 01430004.0
(22) Date de dépôt: 22.01.2001
(51) Int. Cl.: A01D 51/00, A01D 46/00

(54) **Machine pour le ramassage de produits agricoles répandus sur le sol, en particulier de petits fruits**
Vorrichtung zum Sammeln von landwirtschaftlichen, am Boden liegenden Produkten, insbesondere von kleinen Früchten
Device for gathering agricultural products from the ground, especially small fruits

(43) Date de publication de la demande: 24.07.2002
(73) Titulaire: Pellenc Iberica S.L., 23009 Jaen (ES)
(72) Inventeur: Bouyou, Bertrand, 23009 Jaen (ES)
(74) Mandataire: Marek, Pierre

(56) Documents cités:
- FR-A- 2 441 327
- FR-A- 2 720 220
- GB-A- 2 173 684
- US-A- 3 518 819
- US-A- 3 780 511
- US-A- 5 592 805
- US-A- 6 000 203

## Description

La présente invention concerne une machine pour le ramassage de produits agricoles répandus sur le sol. Selon une application très intéressante, la machine selon l'invention est plus particulièrement destinée au ramassage de fruits de petites dimensions (olives, noix, noisettes, châtaignes, amandes, pistaches, etc.) tombés sur le sol, naturellement ou sous l'action de dispositifs de récolte mécanique.

Différents procédés et appareils ont été proposés, à ce jour, pour ramasser les petits fruits tombés au sol. Parmi ces appareils, on connaît notamment des dispositifs utilisant des balais ou brosses rotatives permettant de pousser les fruits jusqu'à un système de récupération, comprenant généralement un transporteur et un récipient ou contenant. Dans cette catégorie d'appareils, on distingue les dispositifs utilisant des brosses ou balais tournant autour d'axes verticaux (par exemple : US-A-3.893.286) et les systèmes comportant des brosses ou balais à axes horizontaux (par exemple : FR-A-2.720.220).

Les brosses à axe vertical des machines de ramassage utilisant de telles brosses ont essentiellement pour fonction de déplacer les fruits sur le sol afin de constituer des andins facilitant leur ramassage ultérieur au moyen d'une deuxième machine.

Les machines utilisant des brosses à axe horizontal dans le domaine desquelles entre la présente invention, permettent un chargement direct, en un seul passage des produits balayés. Toutefois, les machines connues de ce type sont conçues pour pouvoir être installées à l'avant d'un véhicule agricole, de sorte que le volume qu'elles occupent génère au moins deux importants inconvénients :
- il constitue un obstacle au passage et à l'évolution de la machine sous les arbres présentant des branches basses (oliviers, par exemple) ;
- il gène la visibilité de la zone de récolte par le conducteur de la machine.

La machine décrite dans FR-A-2.441.327 essaie de remédier à ces inconvénients.

Cette machine comprend :
- un châssis, par exemple un châssis agencé pour pouvoir être attelé ou fixé à un véhicule tracteur ou porteur, de préférence au système de fixation à trois points arrière d'un tracteur agricole ;
- une tête de récolte supportée par ce châssis et comprenant un système de balais rotatifs monté tournant autour d'un axe occupant une position horizontale ou approximativement horizontale, en cours de travail ; cette machine étant notamment remarquable en ce que ladite tête de récolte est montée sur le châssis de façon à ce que, dans la position de travail, elle se trouve entièrement déportée latéralement par rapport à la zone sur laquelle se déplace le véhicule porteur, de manière que le ramassage des fruits ou autres produits agricoles se réalise sur une zone déportée latéralement par rapport à la précédente
- un convoyeur assurant le transport des produits récoltés jusqu'à un récipient, ce convoyeur comportant un tronçon de chargement et une extrémité de déchargement, ledit tronçon de chargement étant disposé à l'arrière des brosses rotatives de la tête de récolte et se déplaçant selon une direction parallèle ou sensiblement parallèle à l'axe de rotation de celles-ci.

Cette configuration permet de réaliser une tête de récolte compacte qui présente l'avantage de pouvoir récolter les fruits directement sur le lieu de leur chute naturelle, c'est-à-dire sous les branches des arbres, même dans le cas d'arbres à branches basses tels que les oliviers. Outre le gain de rentabilité dû à la suppression de l'opération d'andainage, cette disposition caractéristique de l'invention influe de manière importante sur la qualité des fruits ramassés en évitant les blessures dues au déplacement de ceux-ci sur le sol. En outre, la machine est plus particulièrement prévue pour être positionnée à l'arrière du véhicule porteur, de sorte que le conducteur de ce dernier a une parfaite visibilité des zones dans lesquelles gisent les fruits à ramasser.

Un inconvénient des machines avec une tête de récolte étant montée, dans la position de travail, entièrement déportée latéralement par rapport à la zone sur laquelle se déplace le véhicule porteur est la largeur de la machine.

L'objet de l'invention est de présenter une telle machine ayant, dans une position de "déplacement route", une largeur compatible avec le gabarit autorisé par le code de la route.

Un autre important inconvénient des machines connues de récolte de fruits au sol résulte du fait que le ramassage direct de ces derniers, sans andainage, impose une largeur de la brosse cylindrique de chargement incompatible avec les irrégularités du sol, de sorte que de multiples passages dans les mêmes zones sont nécessaires pour récolter un fort pourcentage (proche de 100 %) de fruits. Pour pallier à cet inconvénient, le document FR-A-2.720.220 a proposé un dispositif de ramassage comportant une brosse rotative transversale comportant deux balais diamétralement opposés et constitués, chacun, par une pluralité de pales de faible longueur juxtaposées sur toute la longueur du balai et montées, individuellement sur un axe commun au moyen de supports déformables tels qu'une paire de parallélogrammes déformables, de sorte que chaque pale peut ajuster automatiquement sa hauteur en fonction du relief du sol.

Toutefois, une telle brosse ne peut tourner à des vitesses élevées, et les mouvements complexes effectués par ses pales ainsi montées, durant leur rotation, sont incompatibles avec une récolte efficace et avec un balayage ménageant l'intégrité des fruits.

D'autre part, si les balais constitués de pales juxtaposées peuvent effectivement épouser la configuration du terrain, le déflecteur transversal disposés au-dessus desdits balais et permettant de rabattre les fruits balayés sur un dispositif de réception de la récolte, peut se trouver placé à une distance variable par rapport à l'extrémité travaillante de chacune desdites pales. Il peut donc en résulter que des fruits soient rabattus par le déflecteur en dehors du dispositif de réception de la machine, si leur point de soulèvement par les poils des pales rotatives n'est pas placé à la bonne distance, ce qui peut être le cas lorsqu'une pale balaie une zone creuse.

Pour cela, suivant une autre importante disposition caractéristique de l'invention, la tête de récolte est constituée d'une pluralité de modules de ramassage disposés cote à côte, et indépendants les uns des autres, chacun de ces modules juxtaposés indépendants comprenant une brosse rotative et son moteur d'entraînement en rotation, et étant supporté par un bras porteur ou bras de récolte, sur lequel il est monté par l'intermédiaire de moyens autorisant un déplacement vertical de ladite brosse, en cours de travail.

Grâce à cette disposition, les modules de ramassage sont juxtaposés de manière à récolter les fruits sur toute la largeur de la tête de récolte. Chaque module possède une largeur compatible avec les irrégularités du terrain et une course verticale lui permettant de suivre le profil du sol sans en perdre le contact en cas de passage dans des creux. II est ainsi possible de ramasser sinon la totalité du moins un pourcentage proche de 100 % des fruits répandus sur le sol.

En général, les sols rencontrés lors de la récolte peuvent être constitués de tout type de terre, allant de l'argile au sable et incorporant un pourcentage plus ou moins important de pierres et de cailloux, voire recouverts d'herbe, les conditions de récolte pouvant être sèches ou humides. D'autre part, aux fruits tombés des arbres, naturellement ou par suite de la mise en oeuvre de dispositifs de secouage, sont mêlés des feuilles, des branches ou brindilles et autres débris.

Un autre sérieux inconvénient des machines utilisant des brosses à axe horizontal est qu'elles ramassent sans distinction, tout ce qu'elles balayent, de sorte que les fruits restent souvent la plus faible portion du produit récolté et qu'il est nécessaire de procéder ensuite à une opération de triage s'effectuant en plusieurs étapes, ce qui augmente le coût de la récolte et repousse le moment de l'utilisation de celle-ci. Par ailleurs, il est nécessaire de ramener d'importants volumes de terre sur le lieu de la récolte, ce qui implique des interventions supplémentaires et, par conséquent, des pertes de temps et une augmentation des coûts.

Selon une autre importante disposition caractéristique, le convoyeur de récolte est constitué par un tapis transporteur trieur réalisé sous forme de bande sans fin ajourée, de sorte que les produits récoltés par lesdits modules de ramassage sont envoyés sur le tronçon de ramassage dudit tapis transporteur trieur et triés par ce dernier, durant leur acheminement en direction de l'extrémité déversante de celui-ci.

Grâce à cette disposition, il est possible d'extraire, de la récolte, la terre chargée par les brosses rotatives et de restituer immédiatement celle-ci sur le lieu même où elle a été enlevée par lesdites brosses.

D'autres dispositions de l'invention seront décrites dans les revendications dépendantes.

Les buts, caractéristiques et avantages ci-dessus, et d'autres encore, ressortiront mieux de la description qui suit et des dessins annexés dans lesquels :
La figure 1 est une vue en perspective de la machine selon l'invention représentée installée à l'arrière d'un tracteur agricole, en position de travail.
La figure 2 est une vue en plan de la figure 1.

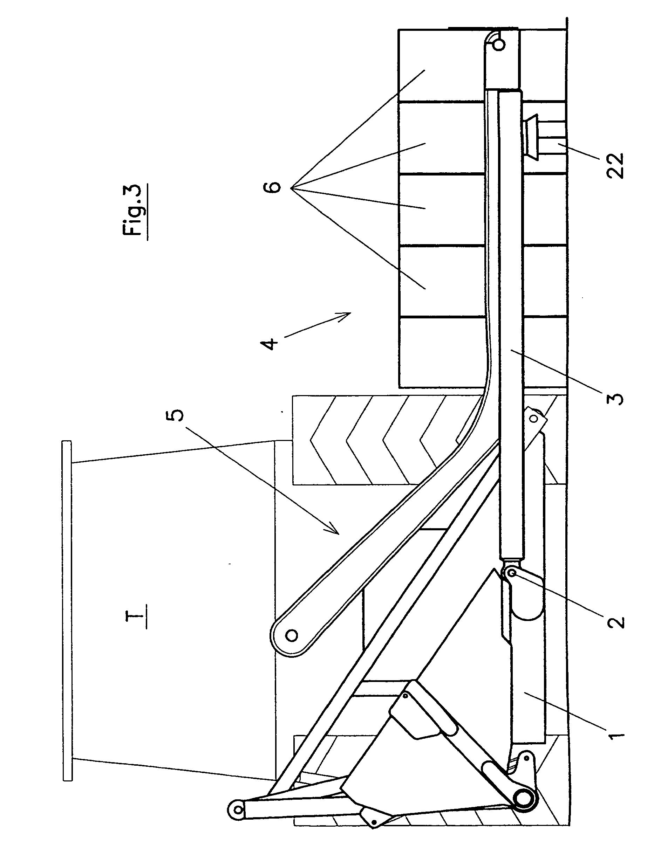

La figure 3 est une vue arrière de la machine montrée en position de travail.
La figure 4 est une vue arrière montrant la machine en position relevée de non utilisation permettant le déplacement sur route.
La figure 5 est une vue frontale de la machine seule.
La figure 6 est une vue frontale, avec arrachement partiel, de la tête de récolte de la machine.
La figure 7 est une vue partielle et à plus grande échelle de la figure 6.

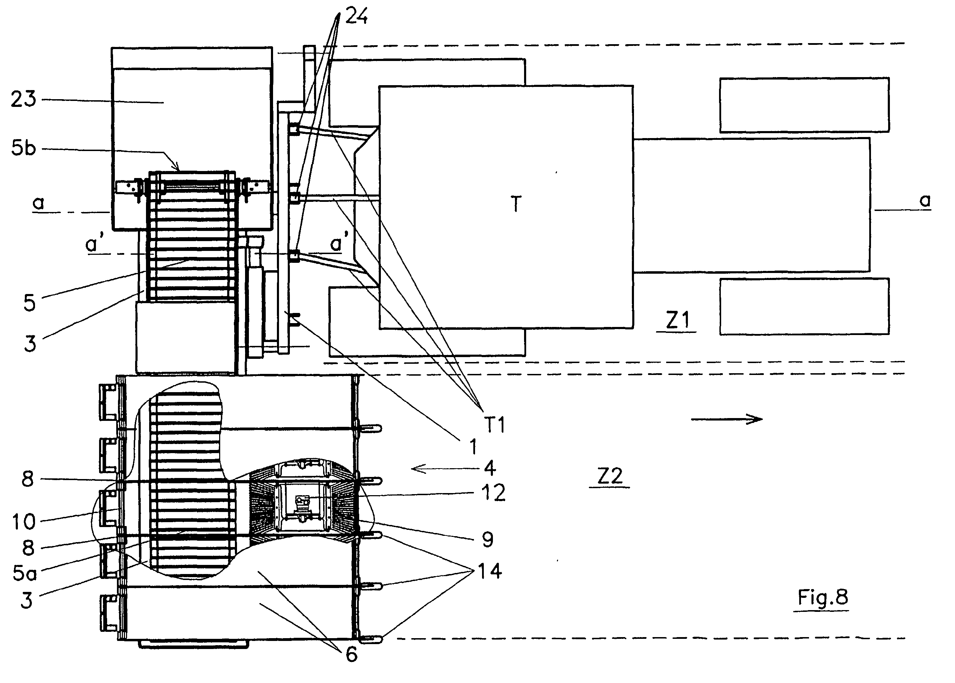

La figure 8 est une vue en plan, avec arrachement partiel, de la figure 6.

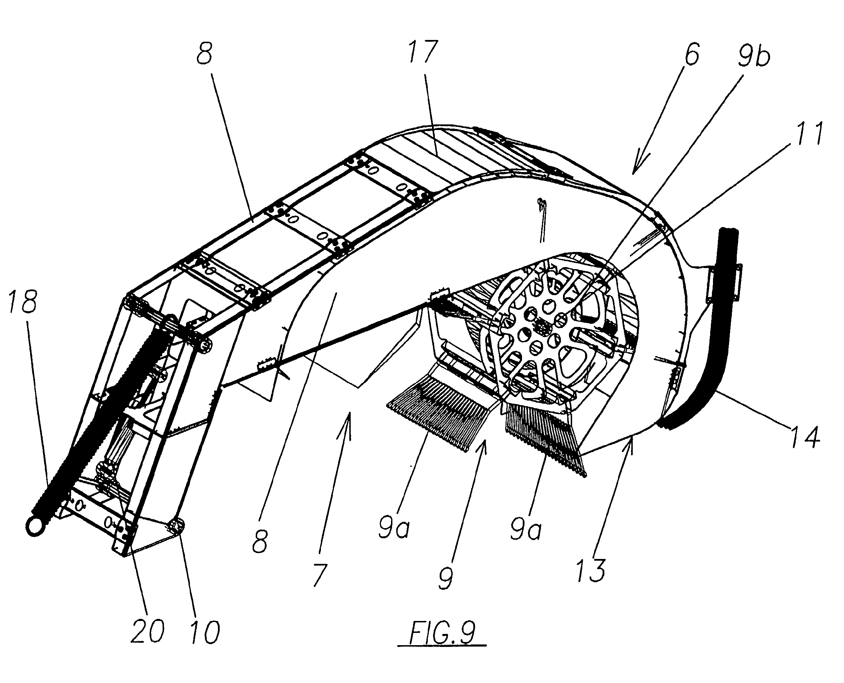

La figure 9 est une vue en perspective d'un module de ramassage de la tête de récolte.
La figure 10 est une vue en coupe longitudinale de l'un des modules de ramassage de la tête de récolte, représentée en position de travail.
Les figures 11 et 12 sont des vues en plan et à caractère schématique illustrant deux méthodes de récolte au sol des fruits tombés sous les branches des arbres.
La figure 13 est une vue frontale avec arrachement partiel et la figure 14 une vue arrière, à caractère schématique, illustrant l'adaptation de la tête de récolte à la conformation du terrain, en cours de récolte des fruits tombés sous les branches des arbres.

On se réfère auxdits dessins pour décrire un exemple avantageux, quoique non limitatif, de réalisation de la machine de ramassage de produits agricoles répandus sur le sol, selon la présente invention.

Cette machine comprend un robuste châssis 1 permettant son attelage à un véhicule tracteur ou son montage amovible sur un véhicule porteur. Bien entendu, ces exemples n'excluent pas la possibilité de réaliser l'invention sous forme d'une machine automotrice équipée à demeure du châssis supportant les différents organes de récolte, décrits ci-après.

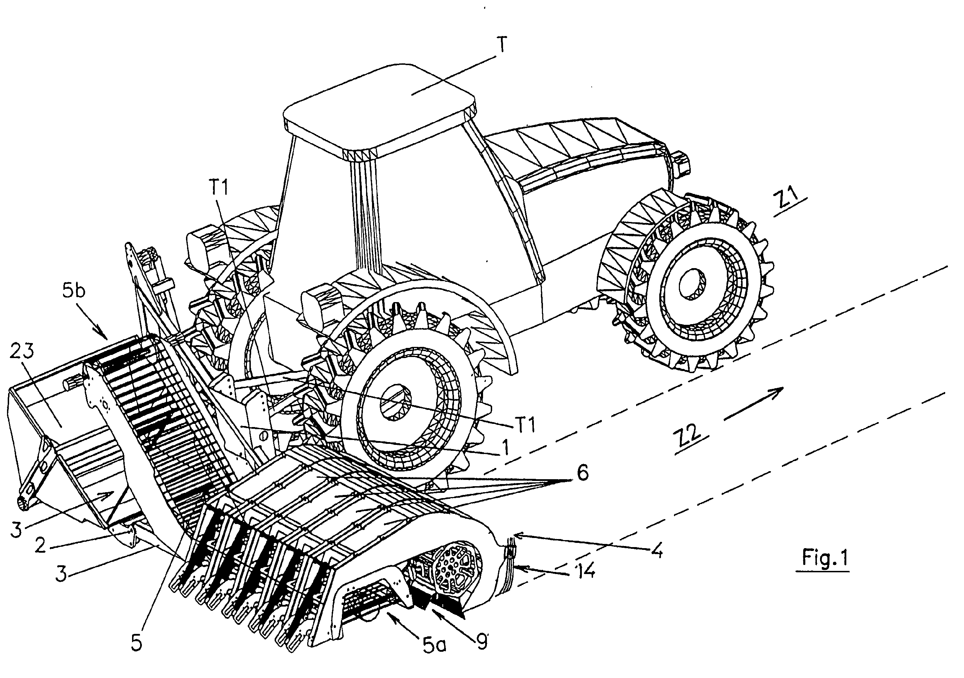

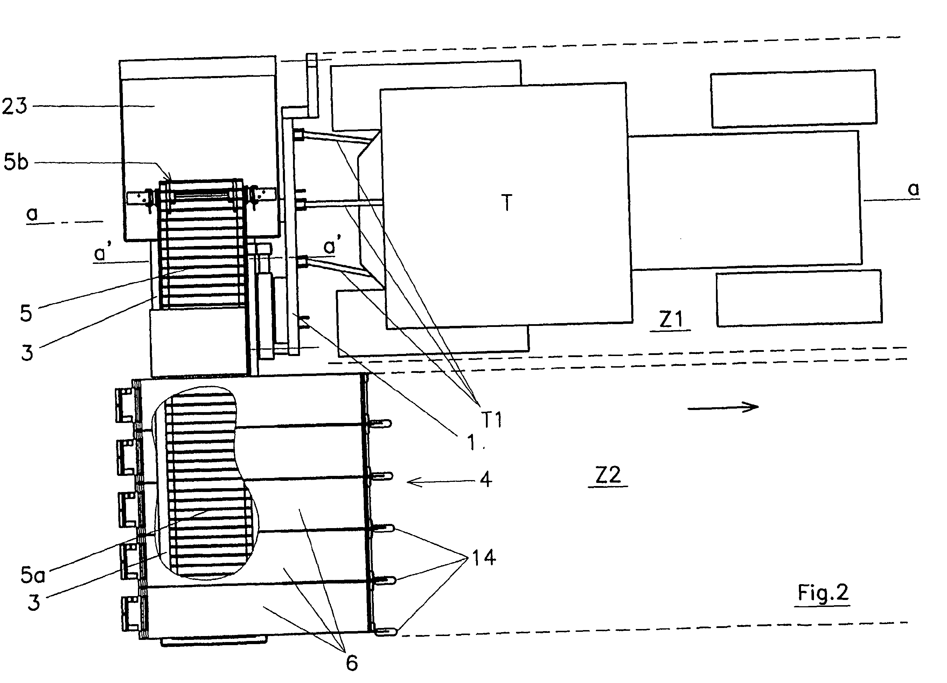

De manière préférée, le châssis 1 est agencé, de façon connue en soi, pour permettre l'attelage de la machine au dispositif de fixation à trois points T1 arrière d'un tracteur agricole T (figures 1 et 2), par exemple au moyen de chapes d'accouplement 24 solidaires dudit châssis.

Sur le châssis 1, est monté, avec une aptitude de pivotement autour d'un axe horizontal ou sensiblement horizontal 2, un bâti de forme allongée, désigné dans son ensemble par la référence 3.

Lorsque le châssis 1 est attelé au système de fixation à trois points du tracteur T, l'axe a'-a' de pivotement 2 du bâti 3 est orienté parallèlement au sens d'avancement de la machine et se trouve placé à proximité de l'axe d'avancement a-a dudit tracteur (figure 2).

Le bâti pivotant 3 remplit une double fonction :- d'une part, il porte la tête de récolte désignée dans son ensemble par la référence 4 et installée sur sa portion terminale et, - d'autre part, il supporte l'organe de transport des fruits récoltés et, de manière plus particulièrement avantageuse, un organe de transport et de nettoyage de ces derniers, constitué par un convoyeur trieur 5 comprenant une bande sans fin ajourée. Ce bâti est appelé "bras de récolte" dans l'exposé qui suit, par rapport à cette double fonction.

Comme le montrent notamment les figures 1 et 2, lorsque la machine selon l'invention est attelée ou fixée à l'arrière d'un tracteur T, le bras de récolte constitué par le bâti pivotant 3 se trouve orienté perpendiculairement à l'axe d'avancement a-a du tracteur et s'étend latéralement par rapport à l'un des côtés dudit tracteur. De la sorte, la tête de récolte 4 installée sur la partie débordante du bras de récolte 3 se trouve déportée sur l'un des côtés du tracteur agricole ou de l'engin porteur, de telle manière que la récolte des fruits se réalise sur une zone Z2 déportée latéralement par rapport à la zone Z1 sur laquelle se déplace le tracteur ou engin porteur, ce qui, outre l'avantage précédemment souligné, évite que ledit tracteur ou engin porteur ne passe sur la zone de ramassage.

La tête de récolte 4 est constituée par une pluralité de modules de ramassage 6 placés côte à côte et indépendants les uns des autres, la juxtaposition de ces modules définissant la largeur de travail de ladite tête de récolte. Le nombre et la largeur des modules de ramassage peuvent varier en fonction de la nature des sols, de la configuration des plantations, des espèces de fruits ou autres produits à ramasser, etc. Selon l'exemple représenté, la tête de récolte comprend cinq modules de ramassage 6.

Chaque élément de ramassage 6 comprend une ossature rigide 7 en forme d'arceau, comprenant deux flancs espacés 8. Dans la partie avant de cette ossature, est montée une brosse rotative 9, tandis que ladite ossature 7 est installée, par l'intermédiaire de sa partie postérieure et avec une aptitude de pivotement autour d'un axe 10 rigidement solidaire du bâti 3. Cet axe de pivotement 10 est commun à tous les modules de ramassage 6. Il est orienté parallèlement à l'axe de rotation 11 de la brosse rotative 9, et perpendiculairement à l'axe d'avancement a-a du véhicule porteur T, en cours de travail.

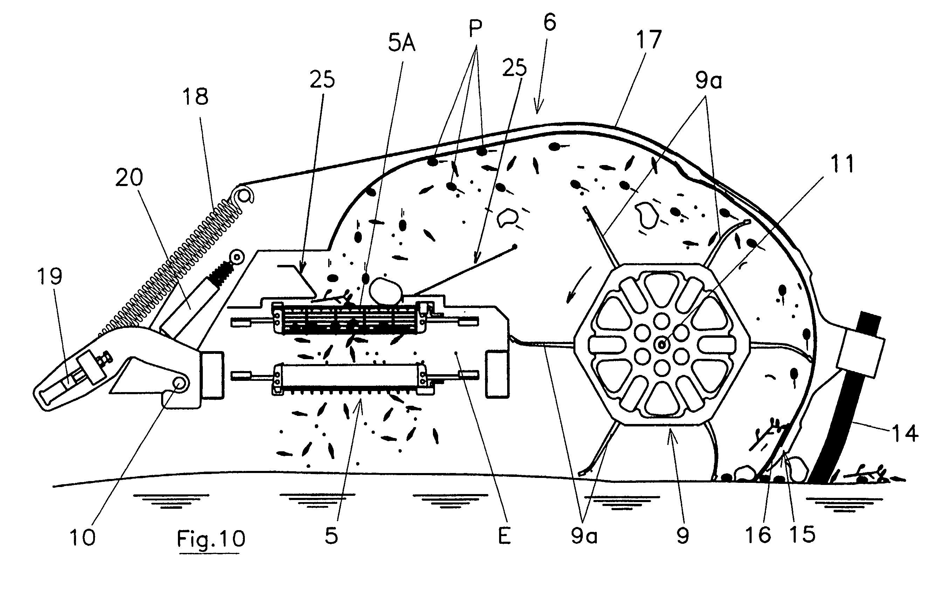

Un espace E est ménagé entre l'axe 11 de la brosse rotative 9 de chaque module de ramassage 6 et l'axe 10 sur lequel est monté l'ensemble des modules de ramassage basculants et, dans cet espace E est logé le tronçon de chargement 5A du transporteur trieur 5. De la sorte, l'axe de basculement 10 des modules de ramassage 6 est disposé à l'arrière du tronçon de chargement 5A du transporteur trieur 5, lui-même disposé à l'arrière de la brosse rotative 9 (figure 10).

Les brosses de balayage 9 peuvent être avantageusement constituées, chacune, par une pluralité de balais souples 9a positionnés radialement sur un tambour 9b dont l'axe horizontal 11 se trouve orienté perpendiculairement à la direction d'avancement de la machine, en cours de travail. Chaque brosse comprend, par exemple, six balais radiaux espacés de 60°.

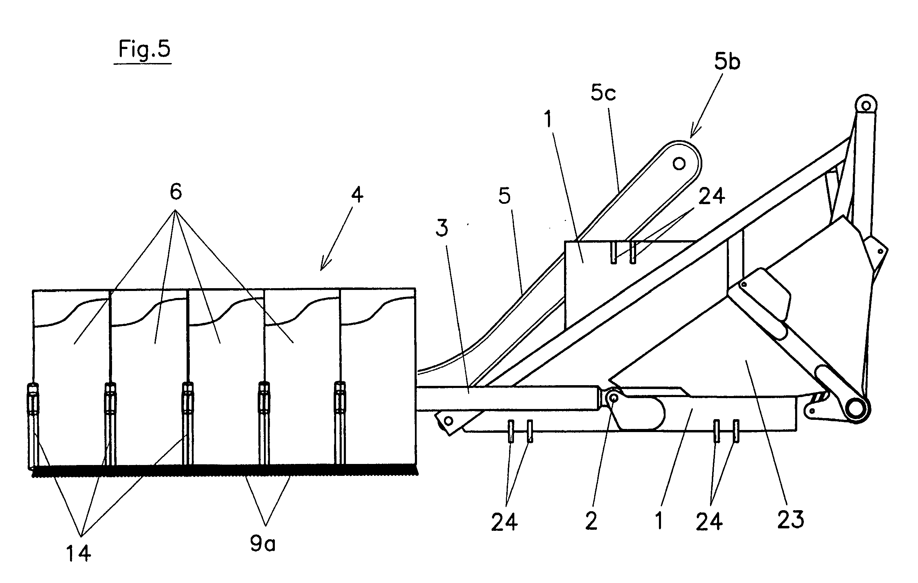

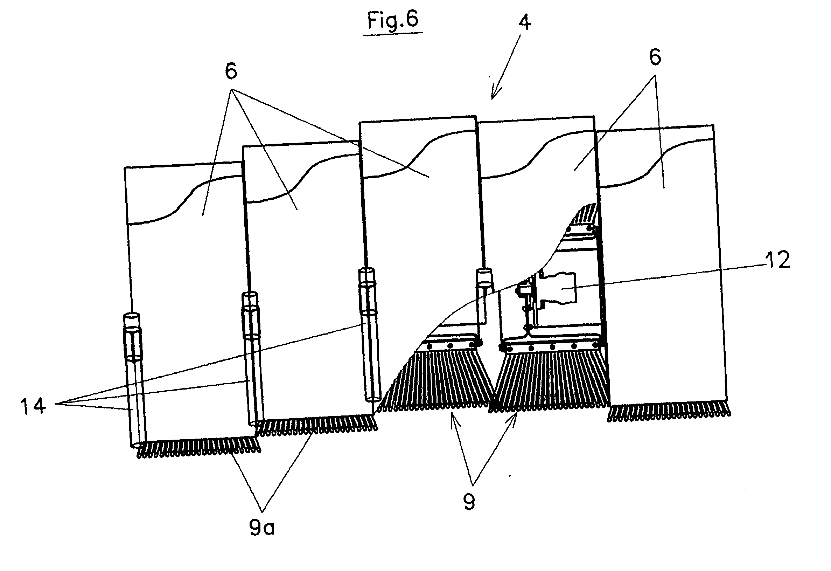

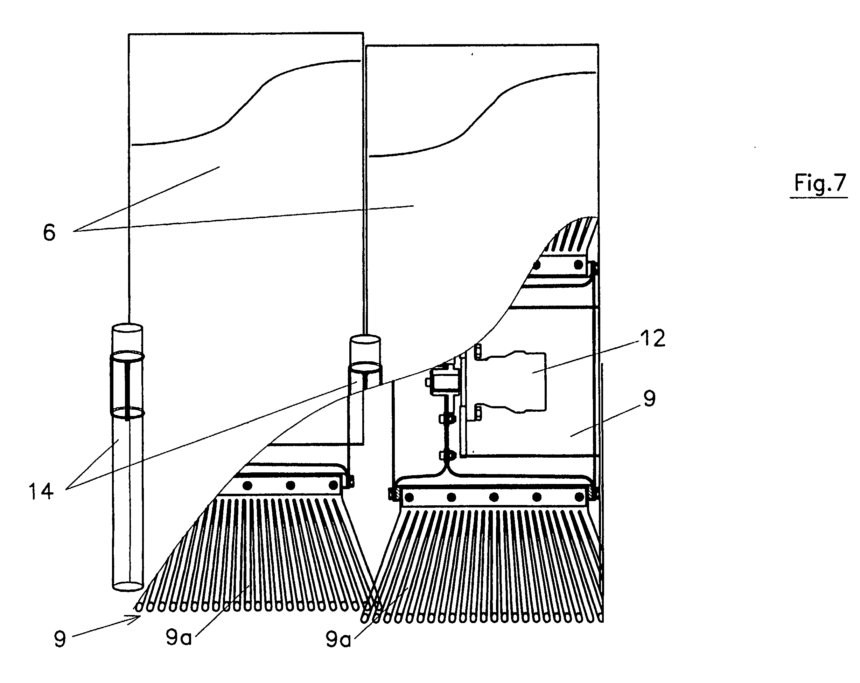

De préférence, chaque tambour 9b est légèrement plus étroit que l'ossature 7 du module de ramassage qui le supporte, tandis que les balais 9a couvrent une largeur au sol supérieure à celle desdites ossatures de manière à permettre un balayage de la zone étroite comprise entre deux modules voisins (voir figures 5 à 7).

Chaque brosse ainsi réalisée est entraînée en rotation de préférence par un moteur hydraulique 12, propre à ladite brosse, cette rotation générant le mouvement de balayage dans le sens d'avancement de la machine.

La partie inférieure avant 13 des deux flancs 8 de l'ossature des modules de ramassage 6, se termine en forme de ski ou patin. En cours de travail, ces skis ou patins glissent sur le sol, en assurant ainsi une position constante des brosses 9 par rapport à ce dernier.

Outre leur fonction structurelle, les flancs 8 servent à guider les fruits en canalisant leur trajectoire depuis le sol jusqu'à leur chute sur le convoyeur trieur.

Afin d'éviter d'écraser des fruits avec les patins 13, ceux-ci ont une faible largeur (de l'ordre de quelques millimètres). En outre, chaque patin 13 peut être précédé d'un dispositif 14 permettant de déplacer latéralement les produits à récolter pour les éloigner de la zone sur laquelle va glisser ledit patin. Ce dispositif 14 est fixé à l'avant du patin 13, de manière à épouser les dénivelés du sol, tout en disposant d'une liberté de déplacement dans la direction verticale, pour ne pas influencer la position dudit patin, tout en restant toujours au contact du sol. Il peut être constitué par un balai souple ou semi-rigide 14 ou par une pièce rigide, monté à l'avant du patin 13, fixement ou avec une aptitude de mobilité dans un plan vertical.

A l'avant, les modules de ramassage 6 présentent une ouverture d'entrée 15 munie d'une bavette souple d'étanchéité 16 appelée à glisser sur le sol, devant la zone de balayage, en cours de travail. Cette bavette est prolongée, en direction du haut, par une paroi en forme de carter 17 enveloppant la brosse de balayage jusqu'à une zone située en arrière de celle-ci, cette paroi enveloppante reliant les bords supérieurs des deux flancs rigides 8.

De manière avantageuse, cette enveloppe qui permet le guidage des fruits, est réalisée dans une matière souple ou semi-rigide. La surface interne de cette enveloppe doit être la plus lisse possible pour favoriser le glissement des fruits durant leur trajectoire en direction du convoyeur trieur 5. D'autre part, lors de la rotation de la brosse 9, les balais 9a de celle-ci frottent sur la surface interne de l'enveloppe 17. Les chocs résultant de la rencontre des balais 9a avec l'enveloppe 17 engendrent des vibrations qui, combinées au frottement desdits balais sur la surface interne de ladite enveloppe, évitent la formation de dépôts de terre sur la partie intérieure de celle-ci.

Le poids de chaque module de ramassage 6 est compensé par un ressort d'équilibrage 18 positionné de telle manière que la force d'appui des patins 13 sur le terrain soit réduite et reste constante quelles que soient la conformation du sol et la position desdits patins. Ce ressort d'équilibrage 18 travaillant en extension, est fixé, par l'intermédiaire de ses extrémités opposées, d'une part, à l'arrière de l'ossature rigide du module articulé et, d'autre part, sur le bras de récolte 3, par l'intermédiaire d'un tendeur réglable 19.

De plus, le ressort d'équilibrage 18 de chaque module de ramassage 6 est jumelé à un amortisseur 20 disposé parallèlement ou sensiblement parallèlement audit ressort, et qui évite les oscillations parasites ou rebonds du module de ramassage, notamment lors des déplacements de la tête de récolte sur sol dur et/ou à vitesse élevée.

La combinaison de ces caractéristiques permet aux différents modules de ramassage de la tête de récolte de maintenir une position parfaite par rapport au sol, dans toutes les conditions, et, par conséquent, de réaliser un balayage optimal, même sur un sol irrégulier.

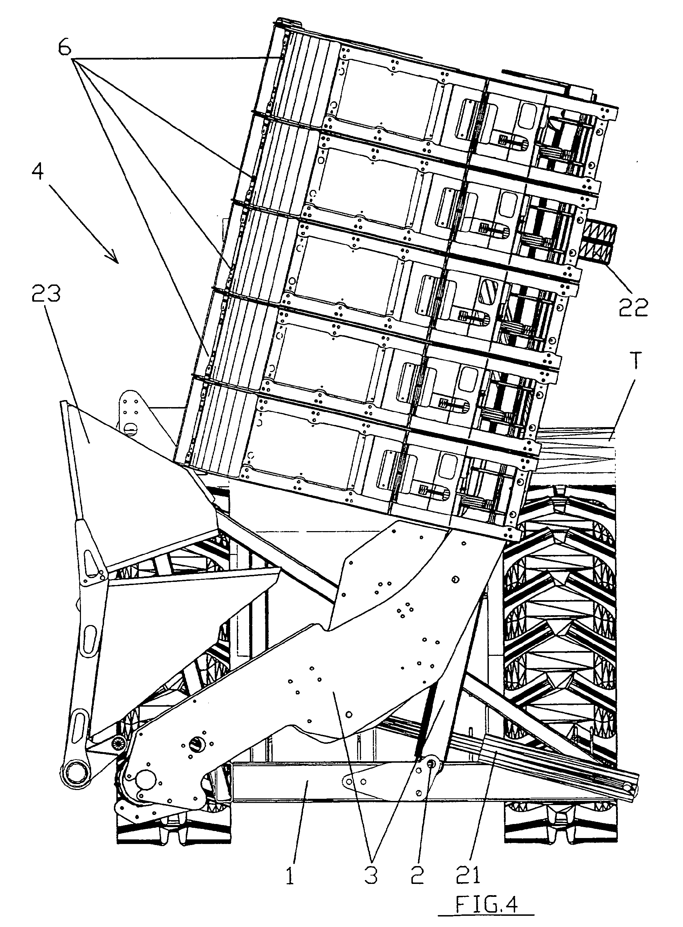

Comme indiqué précédemment, l'axe horizontal 2 de pivotement du bras de récolte 3 est proche de l'axe d'avancement a-a du véhicule tracteur ou porteur T (figure 2) et il est en outre situé à une faible hauteur du sol. Cette disposition permet de maintenir la tête de récolte 4 parallèle ou sensiblement parallèle au profil du sol, en position de travail, et aussi d'escamoter ladite tête de récolte derrière ledit véhicule, en position relevée de "déplacement route", au moyen d'une rotation proche de 90° (figure 4), de façon que l'ensemble de la machine soit compatible en largeur avec le gabarit autorisé par le code de la route ou la largeur des chemins agricoles. Ce pivotement est assuré par un vérin hydraulique 21 fixé, par l'intermédiaire de ses extrémités opposées et au moyen d'articulations, au bâti 3 du bras de récolte et au châssis 1, respectivement.

En position de ramassage, le vérin 21 est maintenu "flottant", afin de laisser le bras de récolte épouser le profil du sol avec lequel il se maintient en contact par l'intermédiaire d'une roue 22 (ou d'un patin) équipant ledit bras de récolte et située au voisinage de l'extrémité de sa partie supportant la tête de récolte 4. Une pression régulée est maintenue dans le vérin hydraulique 21, de sorte à permettre de contrôler la force d'appui au sol de la roue ou patin 22.

On prévoit d'associer ou de substituer, à la roue ou patin 22, un palpeur (non représenté) installé à la partie inférieure de la tête de récolte 4 de façon à se trouver au contact du sol, dans la position de travail, ce palpeur permettant d'envoyer des informations de position à une centrale de distribution configurée pour commander les mouvements du vérin 21, de façon à régler la position de ladite tête de récolte en fonction de la conformation du terrain.

On comprend que le bras de récolte 3 articulé sur le châssis principal 1, se trouve équilibré en poids par l'intermédiaire du vérin 21, de sorte que la roue 22 ou le patin, ou le palpeur, qui équipe le bras à son extrémité, exerce une pression limitée et/ou contrôlée au sol.

La combinaison de ce suivi global du sol et de celui que réalise individuellement chaque module de récolte indépendant 6, permet un contact permanent des balais rotatifs 9 avec le sol.

Comme indiqué précédemment, le bras de récolte 3 est constitué par un bâti de forme allongée lequel constitue également l'ossature rigide d'un convoyeur 5.

Selon une importante disposition caractéristique de l'invention, ce convoyeur est constitué par un tapis transporteur trieur réalisé sous forme de bande sans fin ajourée positionnée perpendiculairement à la direction de déplacement de la machine en cours de travail, de façon à ramener les fruits récoltés à l'arrière du tracteur.

Ce transporteur trieur comporte :
- d'une part, un tronçon de chargement 5a disposé à l'arrière des balais rotatifs 9 des modules de récolte 6, parallèlement aux axes de rotation de ceux-ci, et sur lequel tombe le produit P de la récolte (fruits mélangés aux corps étrangers) ramassé par lesdits balais, et,
- d'autre part, une extrémité de déchargement 5b permettant de déverser les fruits récoltés dans une benne basculante 23 ou récipient collecteur analogue, supportée par le châssis 1 et reliée à ce dernier par un dispositif de basculement et/ou d'ouverture.

Le transporteur trieur 5 comporte deux tronçons approximativement délimités par son axe de pivotement 2, soit : un tronçon amont ou tronçon de chargement 5a bordé par des parois inclinées convergentes 25, ce tronçon occupant une position horizontale ou approximativement horizontale en cours de travail, et un tronçon aval 5c comprenant l'extrémité de déversement 5b.

Le tronçon aval 5c du transporteur forme un angle, par exemple, de l'ordre de 135°, par rapport au tronçon amont de ce dernier, en considérant le sens de déplacement du brin actif du transporteur. De la sorte, ledit tronçon aval qui comprend l'extrémité de déversement 5b est incliné de l'ordre de 45° par rapport à l'horizontale, dans la position de travail.

Cette pente permet de ménager, au-dessous du tronçon aval ascendant 5c, un espace à l'arrière du châssis 1 de la machine, dans lequel peut être logée la benne 23 ou l'extrémité de chargement d'un autre transporteur destiné à alimenter une remorque collectrice accrochée derrière la machine, dans l'axe du véhicule tracteur ou porteur.

La bande convoyeuse du transporteur trieur 5 peut être réalisée sous la forme d'une grille par exemple constituée d'une succession de barreaux transversaux faiblement espacés, et dont la fonction est d'évacuer la terre et les petits corps étrangers, au fur et à mesure du ramassage, durant le trajet de la récolte depuis le tronçon de chargement 5a jusqu'à l'extrémité de déchargement 5b dudit convoyeur trieur.

A cet effet, le tamis transporteur du convoyeur trieur est animé dans la zone de tri comprise entre ses portions extrêmes, d'un mouvement de vibration, par exemple produit par le passage des barreaux transversaux dudit convoyeur trieur sur des galets libres en rotation.

La grille transporteuse peut avantageusement comporter des obstacles (non représentés) dans son tronçon aval ascendant (en position de travail), de façon à assurer un entraînement positif des fruits dans cette portion ascendante.

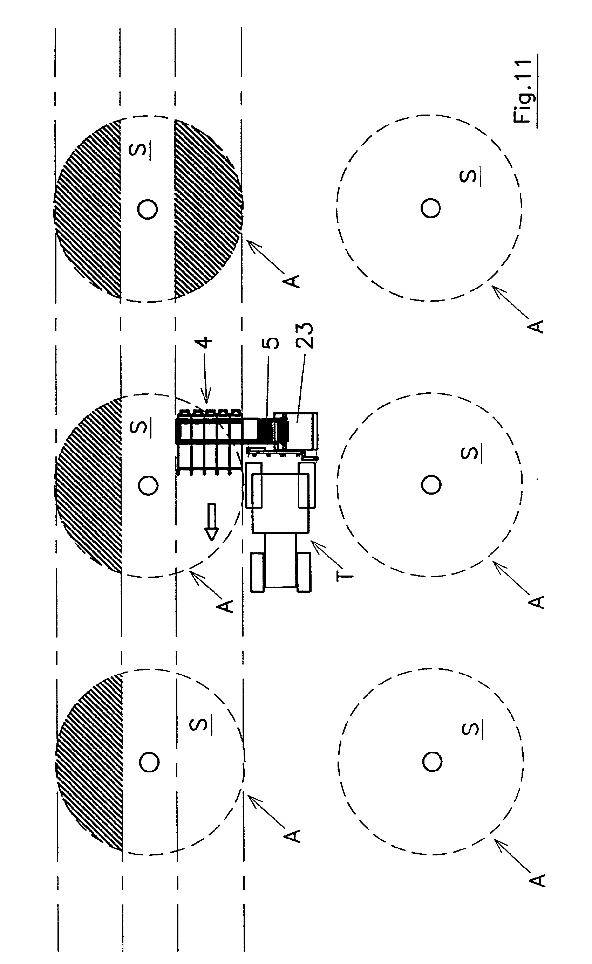

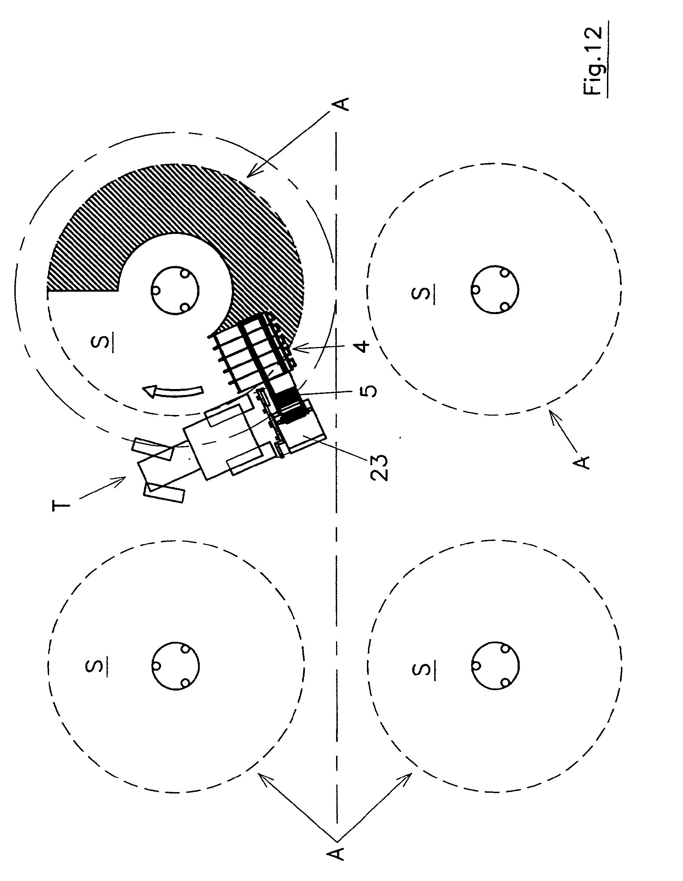

Les figures 11 et 12 illustrent, schématiquement, deux méthodes de récolte mettant en oeuvre la machine de ramassage selon l'invention, les zones hachurées correspondant aux surfaces récoltées.

Selon la figure 11, la machine effectue des trajets rectilignes et perpendiculaires pour récolter la totalité de la surface S approximativement circulaire recouverte par les branches des arbres A.

Suivant la figure 12, la machine effectue un tour complet autour du tronc des arbres A afin de récolter en un seul passage la totalité de la surface S recouverte par les branches desdits arbres.

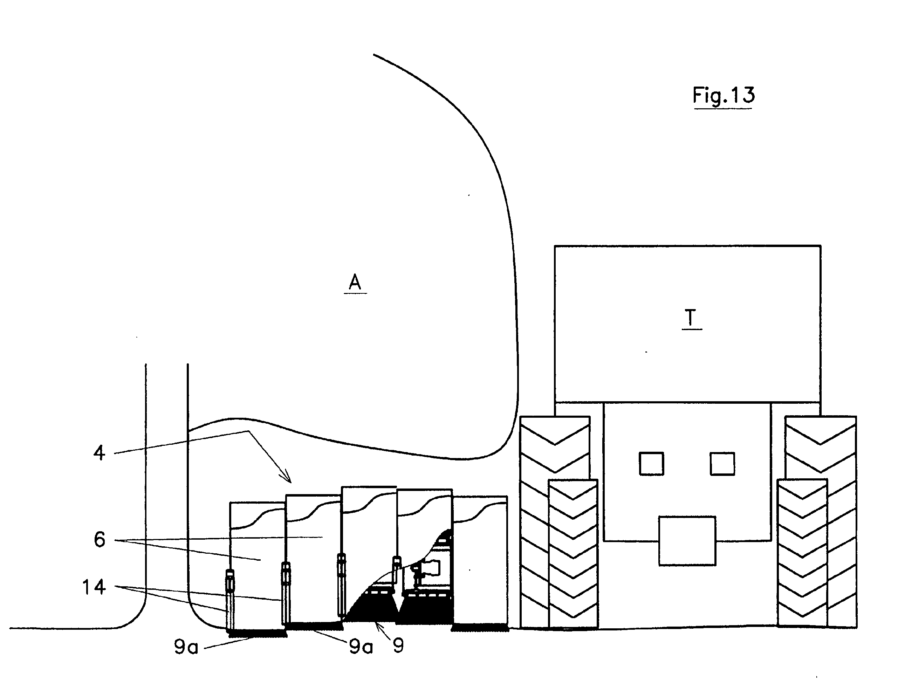

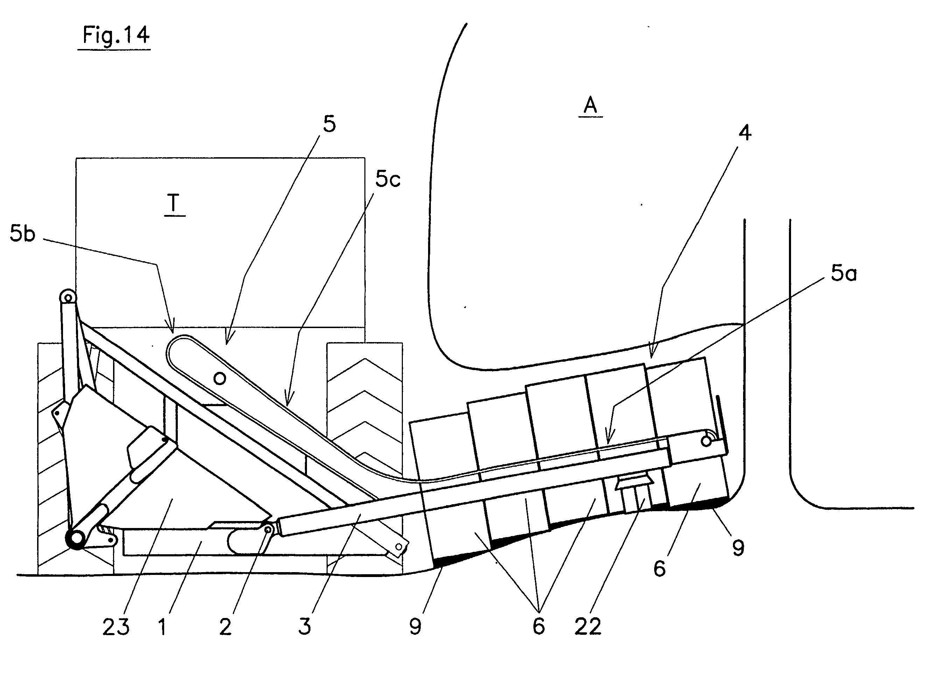

La figure 13 montre l'adaptation de la conformation de la tête de récolte 4 lors de son déplacement sur un sol bosselé, tandis que la figure 14 illustre le positionnement automatique du bras de récolte et l'adaptation de la tête de récolte lors de son déplacement sur un terrain penté et non uni.

## Revendications

1. Machine pour le ramassage de produits agricoles, en particulier de petits fruits, comprenant :
- d'une part, un châssis (1) supportant une tête de récolte (4) comprenant des balais rotatifs (9) montés tournant autour d'un axe (11) occupant une position horizontale ou approximativement horizontale, en cours de travail, cette tête de récolte (4) étant montée sur le châssis (1) de façon à ce que, dans la position de travail, elle se trouve entièrement déportée latéralement par rapport à la zone (Z1) sur laquelle se déplace le véhicule porteur (T), de manière telle que le ramassage des fruits ou autres produits agricoles se réalise sur une zone (Z2) déportée latéralement par rapport à la précédente (Z1), et
- d'autre part, un convoyeur (5) assurant le transport des produits (P) ramassés par la tête de récolte, jusqu'à un récipient (23), ce convoyeur comportant un tronçon de chargement (5a) et une extrémité de déchargement (5b), ledit tronçon de chargement étant disposé à l'arrière des brosses rotatives (9) et se déplaçant selon une direction parallèle ou sensiblement parallèle à l'axe de rotation de celles-ci,
la machine étant **caractérisée en ce que**
- ladite tête de récolte (4) est installée sur un bâti ou bras de récolte (3) de forme allongée lequel constitue également l'ossature rigide du convoyeur (5), ledit bras de récolte étant porté par le châssis (1) avec une aptitude de pivotement autour d'un axe (2) orienté parallèlement au sens d'avancement de la machine, disposé à proximité de l'axe (a-a) du véhicule porteur ou tracteur (T) et situé à une faible hauteur du sol,
- ledit bras de récolte (3) est susceptible d'occuper deux positions, soit une position de travail suivant laquelle il s'étend latéralement par raport au véhicule porteur (T), et une position escamotée à l'arrière dudit véhicule, permettant d'escamoter la tête de récolte (4) derrière ledit véhicule en position relevée de "déplacement route", au moyen d'une rotation proche de 90°.

2. Machine selon la revendication 1, **caractérisée en ce que** les mouvements de pivotement dudit bras de récolte sont assurés par un vérin hydraulique (21)

3. Machine pour le ramassage de produits agricoles, en particulier de petits fruits, selon l'une des revendications 1 ou 2, **caractérisée en ce que** la tête de récolte (4) est constituée d'une pluralité de modules de ramassage (6) disposés côte à côte, et indépendants les uns des autres, chacun de ces modules juxtaposés indépendants comprenant une brosse rotative (9) et son moteur (12) d'entraînement en rotation, et étant supporté par le bras de récolte (3), sur lequel il est monté par l'intermédiaire de moyens (7, 10) autorisant un déplacement vertical de ladite brosse, en cours de travail.

4. Machine pour le ramassage de produits agricoles, en particulier de petits fruits, suivant l'une quelconque des revendications 1 à 3, **caractérisée en ce que** le convoyeur (5) est constitué par un tapis transporteur trieur réalisé sous forme de bande sans fin ajourée, de sorte que les produits (P) récoltés par lesdites brosses (9) sont envoyés sur le tronçon de chargement (5a) dudit tapis transporteur trieur et triés par celui-ci, durant leur acheminement en direction de l'extrémité déversante (5b) de ce dernier.

5. Machine selon la revendication 3, **caractérisée en ce que** chacun des modules de ramassage (6) juxtaposés et indépendants comprend une ossature (7) en forme d'arceau dans la partie avant de laquelle sont montés la brosse rotative (9) et son moteur d'entraînement (12), et dont la partie postérieure est montée avec une aptitude de pivotement autour d'un axe (10) disposé en arrière de la portion amont ou portion de chargement (5a) du convoyeur (5) parallèlement à celui-ci et perpendiculairement au sens d'avancement de la machine.

6. Machine selon l'une quelconque des revendications 1 à 5, **caractérisée en ce que** le bâti ou bras de récolte (3) est équipé d'une roue ou patin (22) d'appui au sol, disposée au voisinage de l'extrémité de sa partie supportant la tête de récolte (4).

7. Machine selon la revendications 5, **caractérisée en ce que** la partie inférieure avant (13) des deux flancs (8) de l'ossature (7) des modules de ramassage, se termine en forme de ski ou patin apte à glisser sur le sol.

8. Machine suivant l'une quelconque des revendications 3 à 7, **caractérisée en ce que** le poids de chaque module basculant (6) de la tête de récolte (4) est compensé par un ressort d'équilibrage (18) fixé, d'une part, à l'arrière de l'ossature rigide du module basculant, et, d'autre part, sur le bras de récolte (3), de préférence par l'intermédiaire d'un tendeur réglable (19).

9. Machine selon la revendication 8, **caractérisée en ce que** le ressort d'équilibrage (18) de chaque module de ramassage (4) est jumelé à un amortisseur (20).

10. Machine selon l'une quelconque des revendications 7 à 9, **caractérisée en ce que** chaque patin (13) des modules de ramassage (6) est précédé d'un dispositif de déblayage (14) permettant de déplacer latéralement les produits à récolter de la zone (Z2) sur laquelle doit glisser ledit patin.

11. Machine suivant l'une quelconque des revendications 3 à 10, **caractérisée en ce que** chaque module de ramassage (6) comprend une paroi supérieure (17) en forme de carter enveloppant la brosse de balayage (9) jusqu'à une zone située en arrière de celle-ci, cette enveloppe (17) étant réalisée dans une matière souple ou semi-rigide et présentant une surface interne contre laquelle frottent les balais (9a) de la brosse rotative (9), les vibrations résultant de la rencontre desdits balais avec l'enveloppe évitant la formation de dépôts de terre sur la partie intérieure de celle-ci.

12. Machine suivant l'une quelconque des revendications 2 à 11, **caractérisée par le fait que** le bras de récolte (3) est équilibré par un vérin hydraulique (21) à l'intérieur duquel est maintenue une pression régulée permettant de contrôler la force d'appui au sol d'une roue ou patin (22), ce vérin étant relié, par l'intermédiaire de ses extrémités opposées et au moyen d'articulations, au bâti (3) du bras de récolte et au châssis (1), respectivement.

13. Machine selon la revendication 12, **caractérisée en ce que** le vérin d'équilibrage (21) est également utilisé pour assurer les mouvements de pivotement du bras de récolte (3) de sa position relevée de repos à sa position abaissée de travail, et vice-versa.

14. Machine selon l'une quelconque des revendications 1 à 13, **caractérisée en ce que** la tête de récolte (4) est munie d'un palpeur appelé à se trouver au contact du sol, dans la position de travail, ce palpeur permettant d'envoyer des informations de position au distributeur commandant l'alimentation du vérin, de façon à régler la position de ladite tête de récolte en fonction de la conformation du terrain.

15. Machine suivant l'une quelconque des revendications 1 à 14, **caractérisée en ce que** le tronçon aval du convoyeur (5) comprenant l'extrémité de déversement (5b) de ce dernier, forme un angle, par exemple de l'ordre de 135°, par rapport au tronçon amont ou tronçon de chargement (5a) dudit transporteur-trieur, un espace se trouvant ainsi ménagé à l'arrière du châssis, dans lequel peut être logée une benne (23) de réception de la récolte ou l'extrémité de chargement d'un autre transporteur.

16. Machine selon l'une quelconque des revendications 4 à 15, **caractérisée en ce que** le tapis transporteur du convoyeur trieur (5) est animé, dans la zone de tri comprise entre ses portions extrêmes de chargement et de déchargement, d'un mouvement de vibration.

## Claims

1. A machine for gathering agricultural products, in particular small fruits, comprising:
- on the one hand a chassis (1) supporting a harvesting head (4) comprising rotary brushes (9) which are mounted rotatably about an axis (11) occupying a horizontal or approximately horizontal position in the course of operation, said harvesting head (4) being mounted on the chassis (1) in such a way that in the operating position it is disposed entirely offset laterally with respect to the zone (Z1) over which the carrier vehicle (T) is moving in such a way that gathering of the fruits or other agricultural products is effected on a zone (Z2) which is laterally offset with respect to the preceding zone (Z1), and
- on the other hand a conveyor (5) providing for transport of the products (P) gathered by the harvesting head to a receptacle (23), said conveyor comprising a loading portion (5a) and an unloading end (5b), said loading portion being disposed to the rear of the rotary brushes (9) and being displaced in a direction parallel or substantially parallel to the axis of rotation thereof,
the machine being **characterised in that**
- said harvesting head (4) is installed on a harvesting arm or frame (3) of elongate shape which also constitutes the rigid framework of the conveyor (5), said harvesting arm being carried by the chassis (1) with a capability of pivotal movement about an axis (2) oriented in parallel relationship with the direction of advance movement of the machine, disposed in the proximity of the axis (a-a) of the carrier vehicle or tractor (T) and disposed at a small height from the ground,
- said harvesting arm (3) is capable of occupying two positions, an operating position in which it extends laterally with respect to the carrier vehicle (T) and a position of being retracted to the rear of said vehicle permitting retraction of the harvesting head (4) behind said vehicle, in a raised 'on-road displacement' position, by means of a rotation close to 90°.

2. A machine according to claim 1 **characterised in that** the pivotal movements of said harvesting arm are effected by a hydraulic jack (21).

3. A machine for gathering agricultural products, in particular small fruits, according to one of claims 1 and 2 **characterised in that** the harvesting head (4) is formed by a plurality of mutually juxtaposed gathering modules (6) which are independent of each other, each of said independent juxtaposed modules comprising a rotary brush (9) and its rotary drive motor (12) and being supported by the harvesting arm (3) on which it is mounted by way of means (7, 8) permitting vertical displacement of said brush in the course of operation.

4. A machine for gathering agricultural products, in particular small fruits, according to any one of claims 1 to 3, **characterised in that** the conveyor (5) is formed by a sorting conveyor belt in the form of an apertured endless belt so that the products (P) harvested by said brushes (9) are passed on to the loading portion (5a) of said conveyor belt and sorted thereby during their movement in the direction of the unloading end (5b) thereof.

5. A machine according to claim 3 **characterised in that** each of the juxtaposed and independent gathering modules (6) comprises an arc-shaped framework (7), in the front part of which are mounted the rotary brush (9) and its drive motor (10) and of which the rearward part is mounted with a capability of pivotal movement about an axis (10) disposed rearwardly of the upstream portion or loading portion (5a) of the conveyor (5) parallel thereto and perpendicularly to the direction of advance movement of the machine.

6. A machine according to any one of claims 1 to 5 **characterised in that** the harvesting arm or frame (3) is fitted with a ground support wheel or skid (22) disposed in the vicinity of the end of its part supporting the harvesting head (4).

7. A machine according to claim 5 **characterised in that** the lower front part (13) of the two sides (8) of the framework (7) of the gathering modules terminate in the form of a ski or skid adapted to slide on the ground.

8. A machine according to any one of claims 3 to 7 **characterised in that** the weight of each pivoting module (6) of the harvesting head (4) is compensated by a balancing spring (18) fixed on the one hand to the rear of the rigid framework of the pivoting module and on the other hand to the harvesting arm (3), preferably by way of a regulatable tensioner (19).

9. A machine according to claim 8 **characterised in that** the balancing spring (18) of each gathering module (4) is twinned with a damper (20).

10. A machine according to any one of claims 7 to 9 **characterised in that** each skid (13) of the gathering modules (6) is preceded by a clearing device (14) permitting lateral displacement of the products to be harvested from the zone (Z2) on which said skid is to slide.

11. A machine according to any one of claims 3 to 10 **characterised in that** each gathering module (6) comprises an upper wall (17) in the form of a casing enclosing the sweeping brush (9) to a zone disposed rearwardly thereof, said casing (17) being made of a flexible or semi-rigid material and having an internal surface against which the brush members (9a) of the rotary brush (9) rub, the vibration resulting from the brush members meeting the casing avoiding the formation of deposits of earth on the lower part of the casing.

12. A machine according to any one of claims 2 to 11 **characterised in that** the harvesting arm (3) is balanced by a hydraulic jack (21), in the interior of which is maintained a regulated pressure permitting control of the force with which a wheel or skid (22) bears against the ground, said jack being connected by way of its opposite ends and by means of pivot connections to the frame (3) of the harvesting arm and to the chassis (1) respectively.

13. A machine according to claim 12 **characterised in that** the balancing jack (21) is also used to produce the pivotal movements of the harvesting arm (3) from its raised rest position to its lowered operating position and vice-versa.

14. A machine according to any one of claims 1 to 13 **characterised in that** the harvesting head (4) is provided with a sensing device intended to be in contact with the ground in its operating position, said sensing device making it possible to send positional information to the distributor controlling the feed to the jack so as to regulate the position of said harvesting head in dependence on the configuration of the ground.

15. A machine according to any one of claims 1 to 14 **characterised in that** the downstream portion of the conveyor (5) comprising the unloading end (5b) of the latter forms an angle for example of the order of 135° with respect to the upstream portion or loading portion (5a) of said sorting-conveying arrangement, a space thus being provided to the rear of the chassis in which can be accommodated a bucket (23 for receiving the harvest or the loading end of another conveyor.

16. A machine according to any one of claims 4 to 15 **characterised in that** the conveyor belt of the sorter-conveyor arrangement (5) is animated with a vibratory movement in its sorting zone between its end loading and unloading portions.

## Patentansprüche

1. Maschine zum Sammeln von landwirtschaftlichen Produkten, insbesondere von kleinen Früchten, umfassend:
- einerseits ein Gestell (1), das einen Erntekopf (4) trägt, der sich drehende Bürsten (9) umfasst, die um eine Achse (11) drehend montiert sind, die während der Arbeit eine horizontale oder annähernd horizontale Position einnimmt, wobei dieser Erntekopf (4) so auf dem Gestell (1) montiert ist, dass er in der Arbeitsposition in Bezug auf die Zone (Z1), auf der sich das Trägerfahrzeug (T) bewegt, vollständig seitlich versetzt ist, so dass das Sammeln der Früchte oder anderer landwirtschaftlicher Produkte in einer Zone (Z2) erfolgt, die in Bezug auf die vorgenannte (Z1) seitlich versetzt ist, und
- andererseits eine Fördereinrichtung (5), die den Transport der vom Erntekopf gesammelten Produkte (P), bis zu einem Behälter (23) sicherstellt, wobei diese Fördereinrichtung einen Ladeabschnitt (5a) und ein Entladeende (5b) umfasst, wobei der Ladeabschnitt hinter den sich drehenden Bürsten (9) angeordnet ist und sich in einer Richtung verschiebt, die parallel oder im Wesentlichen parallel zu deren Drehachse verläuft,
wobei die Maschine **dadurch gekennzeichnet ist, dass**
- der Erntekopf (4) auf einem Rahmen oder Erntearm (3) mit länglicher Form installiert ist, der ebenfalls die starre Konstruktion der Fördereinrichtung (5) bildet, wobei der Erntearm von dem Gestell (1) um eine parallel zur Vorschubrichtung der Maschine ausgerichtete Achse (2) schwenkbar getragen wird, die in der Nähe der Achse (a-a) des Trägerfahrzeugs oder Traktors (T) angeordnet ist und sich in geringer Höhe über dem Boden befindet,
- wobei der Erntearm (3) zwei Positionen einnehmen kann, entweder eine Arbeitsposition, gemäß der er sich in Bezug auf das Trägerfahrzeug (T) seitlich erstreckt, oder eine hinter dem Fahrzeug eingezogene Position, die es gestattet, den Erntekopf (4) hinter dem Fahrzeug in eine angehobene Position für "Straßenfahrt" mittels einer Drehung von fast 90° einzuziehen.

2. Maschine nach Anspruch 1, **dadurch gekennzeichnet, dass** die Schwenkbewegungen des Erntearms durch einen Hydraulikzylinder (21) sichergestellt werden.

3. Maschine zum Sammeln von landwirtschaftlichen Produkten, insbesondere von kleinen Früchten, nach einem der Ansprüche 1 oder 2, **dadurch gekennzeichnet, dass** der Erntekopf (4) aus einer Vielzahl von Sammelmodulen (6) gebildet wird, die nebeneinander und unabhängig voneinander angeordnet sind, wobei jedes dieser nebeneinander liegenden unabhängigen Module eine sich drehende Bürste (9) und ihren Drehantriebsmotor (12) umfasst und von dem Erntearm (3) getragen wird, an dem es mit den Mitteln (7, 10) befestigt ist, die eine vertikale Verschiebung der Bürste während der Arbeit gestatten.

4. Maschine zum Sammeln von landwirtschaftlichen Produkten, insbesondere von kleinen Früchten, nach einem der Ansprüche 1 bis 3, **dadurch gekennzeichnet, dass** die Fördereinrichtung (5) aus einem Sortiertransportband gebildet wird, das in Form eines durchbrochenen Endlosbands so ausgeführt ist, dass die von den Bürsten (9) geernteten Produkte (P) auf den Ladeabschnitt (5a) des Sortiertransportbands verfrachtet und von diesem während Beförderung in Richtung auf das Entleerende (5b) des Letzteren sortiert werden.

5. Maschine nach Anspruch 3, **dadurch gekennzeichnet, dass** jedes der nebeneinander liegenden und unabhängigen Sammelmodule (6) eine Konstruktion (7) in Form eines Bogens umfasst, in deren vorderem Teil die sich drehende Bürste (9) und ihr Antriebsmotor (12) montiert sind, und deren rückwärtiger Teil um eine Achse (10) schwenkbar montiert ist, die hinter dem stromaufwärts liegenden Abschnitt bzw. Ladeabschnitt (5a) der Fördereinrichtung (5) parallel zu dieser und senkrecht zur Vorschubrichtung der Maschine angeordnet ist.

6. Maschine nach einem der Ansprüche 1 bis 5, **dadurch gekennzeichnet, dass** der Rahmen oder Erntekopf (3) mit einem Rad oder einer Kufe (22), das bzw. die in der Nähe des Endes seines Teils angeordnet ist, das den Erntekopf (4) trägt, zum Abstützen auf dem Boden ausgestattet ist.

7. Maschine nach Anspruch 5, **dadurch gekennzeichnet, dass** der untere vordere Teil (13) der zwei Flanken (8) der Konstruktion (7) der Sammelmodule in einer ski- oder kufenförmigen Form endet, die über den Boden gleiten kann.

8. Maschine nach einem der Ansprüche 3 bis 7, **dadurch gekennzeichnet, dass** das Gewicht jedes Kippmoduls (6) des Erntekopfs (4) durch eine Ausgleichsfeder (18) kompensiert wird, die einerseits hinter der starren Konstruktion des Kippmoduls und andererseits auf dem Erntearm (3) befestigt ist, vorzugsweise mittels einer verstellbaren Spannschraube (19).

9. Maschine nach Anspruch 8, **dadurch gekennzeichnet, dass** die Ausgleichsfeder (18) jedes Sammelmoduls (4) mit einem Dämpfungsglied (20) gekoppelt ist.

10. Maschine nach einem der Ansprüche 7 bis 9, **dadurch gekennzeichnet, dass** sich vor jeder Kufe (13) der Sammelmodule (6) eine Räumvorrichtung (14) befindet, die es gestattet, die zu erntenden Produkte seitlich aus der Zone (Z2) zu verschieben, auf der die Kufe gleiten muss.

11. Maschine nach einem der Ansprüche 3 bis 10, **dadurch gekennzeichnet, dass** jedes Sammelmodul (6) eine obere Wand (17) in Form eines Gehäuses umfasst, das die Kehrbürste (9) bis zu einer hinter dieser liegenden Zone umhüllt, wobei diese Umhüllung (17) aus einem weichen oder halbstarren Material ausgeführt ist und eine Innenfläche aufweist, über die die Borsten (9a) der sich drehenden Bürste (9) scheuern, wobei die Vibrationen, die aus dem Aufeinandertreffen der Borsten und der Umhüllung entstehen, die Ausbildung von Erdablagerungen auf deren Innenteil verhindern.

12. Maschine nach einem der Ansprüche 2 bis 11, **gekennzeichnet durch** die Tatsache, dass der Erntearm (3) **durch** einen Hydraulikzylinder (21) ins Gleichgewicht gebracht wird, in dessen Inneren ein geregelter Druck aufrechterhalten wird, der es gestattet, die Aufstützkraft eines Rads bzw. einer Kufe (22) auf dem Boden zu kontrollieren, wobei dieser Zylinder an seinen gegenüberliegenden Enden und mittels Gelenken jeweils mit dem Rahmen (3) des Erntearms und mit dem Gestell (1) verbunden ist.

13. Maschine nach Anspruch 12, **dadurch gekennzeichnet, dass** der Ausgleichszylinder (21) ebenfalls dazu verwendet wird, die Schwenkbewegungen des Erntearms (3) aus seiner angehobenen Ruheposition in seine abgesenkte Arbeitsposition und umgekehrt sicherzustellen.

14. Maschine nach einem der Ansprüche 1 bis 13, **dadurch gekennzeichnet, dass** der Erntekopf (4) mit einem Fühler ausgestattet ist, der dazu bestimmt ist, sich in seiner Arbeitsposition mit dem Boden in Kontakt zu befinden, wobei dieser Fühler es gestattet, Positionsinformationen an den Verteiler zu schicken, der die Leistung des Zylinders steuert, um so die Position des Erntekopfs abhängig von der Form des Terrains zu regulieren.

15. Maschine nach einem der Ansprüche 1 bis 14, **dadurch gekennzeichnet, dass** der stromabwärts liegende Abschnitt der Fördereinrichtung (5), der das Entladeende (5b) der Letzteren umfasst, einen Winkel beispielsweise in der Größenordnung von 135° in Bezug auf den stromaufwärts liegenden Abschnitt oder Ladeabschnitt (5a) der Sortierfördereinrichtung bildet, wobei auf diese Weise ein Raum hinter dem Gestell ausgespart wird, in dem ein Förderkorb (23) zur Aufnahme der Ernte oder das Ladeende eines anderen Fördermittels aufgenommen werden kann.

16. Maschine nach einem der Ansprüche 4 bis 15, **dadurch gekennzeichnet, dass** das Transportband der Sortierfördereinrichtung (5) in dem Sortierbereich, der zwischen ihren Lade- und Entlade-Endabschnitten liegt, mit einer Vibrationsbewegung angetrieben wird.
